# EUROPÄISCHE PATENTSCHRIFT

(11) **EP 2 311 179 B1**
(45) Veröffentlichungstag und Bekanntmachung des Hinweises auf die Patenterteilung: **22.04.2020**
(21) Anmeldenummer: 09779471.3
(22) Anmeldetag: 14.05.2009
(51) Int. Cl.: H02M 7/49, H02M 7/483

(54) **STEUERVERFAHREN ZUR REDUNDANZNUTZUNG IM STÖRUNGSFALL EINES MEHRPHASIGEN STROMRICHTERS MIT VERTEILTEN ENERGIESPEICHERN**
CONTROL METHOD FOR USING REDUNDANCY IN CASE OF A DISTURBANCE IN A MULTIPHASE CONVERTER HAVING DISTRIBUTED ENERGY STORES
PROCÉDÉ DE COMMANDE POUR EXPLOITER LA REDONDANCE EN CAS DE DÉFAILLANCE D'UN CONVERTISSEUR DE COURANT POLYPHASÉ À ACCUMULATEURS D'ÉNERGIE RÉPARTIS

(30) Priorität: 07.08.2008 DE 102008036810
(43) Veröffentlichungstag der Anmeldung: 20.04.2011
(73) Patentinhaber: Siemens Aktiengesellschaft, 80333 München (DE)
(72) Erfinder: HILLER, Marc, 91207 Lauf an der Pegnitz (DE); KRUG, Dietmar, 90459 Nürnberg (DE)
(86) Internationale Anmeldenummer: PCT/EP2009/055812
(87) Internationale Veröffentlichungsnummer: WO 2010/015431

(56) Entgegenhaltungen:
- DE-A1- 10 103 031
- DE-A1-102005 045 091
- US-A- 5 986 909
- EATON D ET AL: "Neutral shift" IEEE INDUSTRY APPLICATIONS MAGAZINE, IEEE SERVICE CENTER, PISCATAWAY, NJ, US, Bd. 9, Nr. 6, 1. November 2003 (2003-11-01), Seiten 40-49, XP011103675 ISSN: 1077-2618

## Beschreibung

Die Erfindung bezieht sich auf ein Verfahren zur Steuerung eines Stromrichters mit verteilten Energiespeichern gemäß dem Anspruch 1.

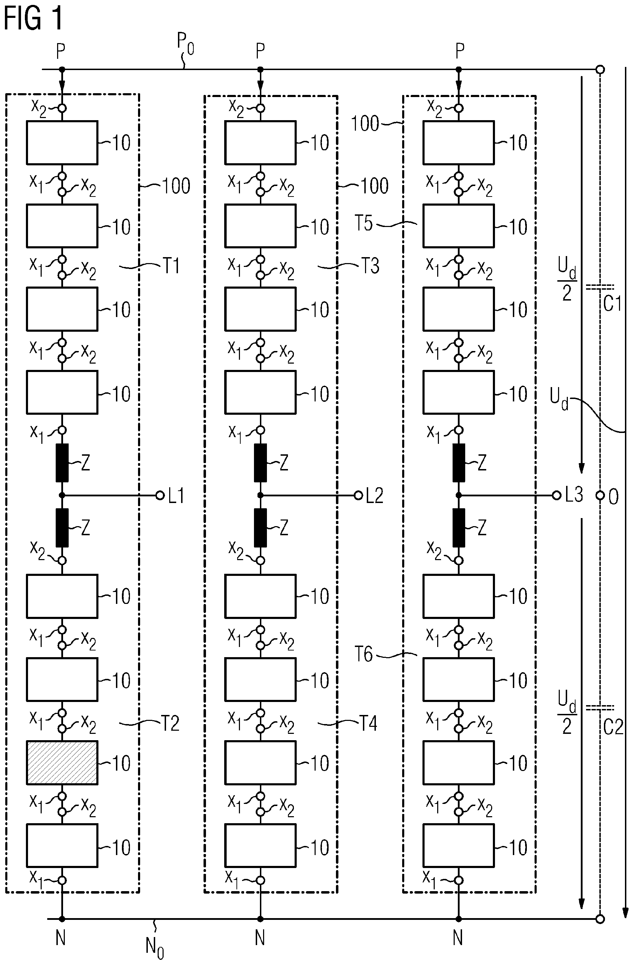

Aus der DE 101 03 031 A1 ist ein Stromrichter mit verteilten Energiespeichern bekannt. Ein Ersatzschaltbild eines derartigen Stromrichters ist in Figur 1 näher dargestellt. Gemäß diesem Ersatzschaltbild weist dieser bekannte Stromrichter drei Phasenmodule auf, die jeweils mit 100 bezeichnet sind. Diese Phasenmodule 100 sind gleichspannungsseitig jeweils mit einer positiven und einer negativen Gleichspannungs-Sammelschiene P₀ und N₀ elektrisch leitend verbunden. Zwischen diesen beiden Gleichspannungs-Sammelschienen P₀ und N₀ wäre bei einem Spannungszwischenkreis-Umrichter eine Reihenschaltung zweier Kondensatoren C1 und C2 geschaltet, an denen eine Gleichspannung U_{d} abfällt. Ein Verbindungspunkt dieser beiden elektrisch in Reihe geschalteten Kondensatoren C1 und C2 bildet einen virtuellen Mittelpunkt O. Jedes Phasenmodul 100, das einen Brückenzweig des mehrphasigen Stromrichters bildet, weist einen oberen und unteren Teilbrückenzweig auf, die, da die Teilbrückenzweige jeweils ein Stromrichterventil des mehrphasigen Stromrichters mit verteilten Energiespeichern darstellt, im Folgenden als Ventilzweig T1 bzw. T3 bzw. T5 und T2 bzw. T4 bzw. T6 bezeichnet werden. Jeder dieser Ventilzweige T1 bis T6 weist eine Anzahl von elektrisch in Reihe geschalteten zweipoligen Subsystemen 10 auf. In diesem Ersatzschaltbild sind vier dieser Subsysteme 10 dargestellt. die Anzahl der Subsysteme 10 pro Ventilzweig T1, ..., T6 ist jedoch nicht auf diese dargestellte Anzahl beschränkt. Jeder Verknüpfungspunkt zweier Ventilzweige T1 und T2 bzw. T3 und T4 bzw. T5 und T6 eines Phasenmoduls 100 bildet einen wechselspannungsseitigen Anschluss L1 bzw. L2 bzw. L3 eines Phasenmoduls 100. Da in dieser Darstellung der Stromrichter drei Phasenmodule 100 aufweist, kann an deren wechselspannungsseitigen Anschlüssen L1, L2 und L3, auch als Lastanschlüsse bezeichnet, eine dreiphasige Last, beispielsweise ein Drehstrommotor, angeschlossen werden.

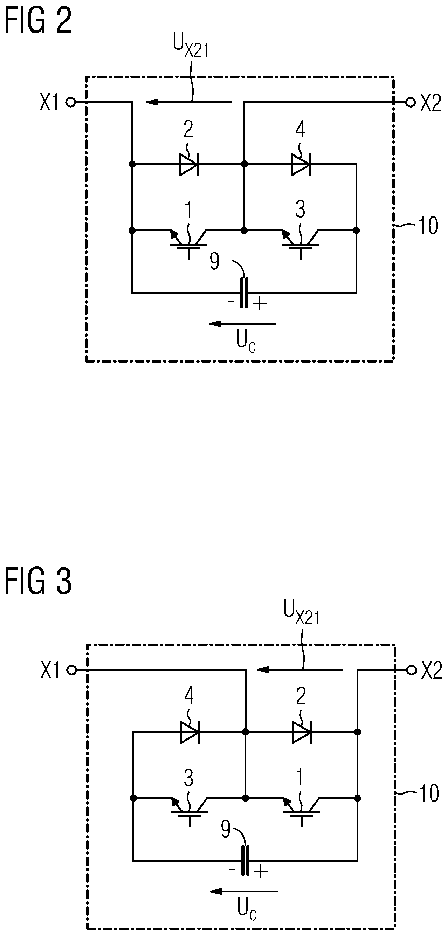

In der Figur 2 ist ein Ersatzschaltbild einer bekannten Ausführungsform eines zweipoligen Subsystems 10 näher dargestellt. Die Schaltungsanordnung nach Figur 3 stellt eine funktional völlig gleichwertige Variante dar. Beide Ausführungsformen eines zweipoligen Subsystems 10 sind aus der DE 101 03 031 A1 bekannt. Diese bekannten zweipoligen Subsysteme 10 weisen jeweils zwei abschaltbare Halbleiterschalter 1 und 3, jeweils zwei Dioden 2 und 4 und jeweils einen unipolaren Speicherkondensator 9 auf. Die beiden abschaltbaren Halbleiterschalter 1 und 3 sind elektrisch in Reihe geschaltet, wobei diese Reihenschaltung elektrisch parallel zum Speicherkondensator 9 geschaltet ist. Jedem abschaltbaren Halbleiterschalter 1 und 3 ist eine der beiden Dioden 2 und 4 derart elektrisch parallel geschaltet, dass diese zum korrespondierenden abschaltbaren Halbleiterschalter 1 oder 3 antiparallel geschaltet ist. Der unipolare Speicherkondensator 9 des Subsystems 10 besteht entweder aus einem Kondensator oder einer Kondensatorbatterie aus mehreren solchen Kondensatoren mit einer resultierenden Kapazität C₀. Der Verbindungspunkt von Emitter des abschaltbaren Halbleiterschalters 1 und Anode der Diode 2 bildet eine Anschlussklemme X1 des Subsystems 10. Der Verbindungspunkt der beiden abschaltbaren Halbleiterschalter 1 und 3 und der beiden Dioden 2 und 4 bilden eine zweite Anschlussklemme X2 des Subsystems 10.

In der Ausführungsform des zweipoligen Subsystems 10 gemäß Figur 3 bildet dieser Verbindungspunkt die erste Anschlussklemme X1. Der Verbindungspunkt von Kollektor des abschaltbaren Halbleiterschalters 1 und Kathode der Diode 2 bilden die zweite Anschlussklemme X2 des Subsystems 10.

In beiden Darstellungen der zwei Ausführungsformen des zweipoligen Subsystems 10 werden als abschaltbare Halbleiterschalter 1 und 3 wie in den Figuren 2 und 3 dargestellt Insulated Gate Bipolar Transistoren (IGBT) verwendet. Ebenfalls können MOS-Feldeffekttransistoren, auch als MOSFET bezeichnet, verwendet werden. Außerdem können Gate Turn Off Thyristoren, auch als GTO-Thyristoren bezeichnet, oder Integrated Gate Commutated Thyristoren (IGCT) verwendet werden.

Gemäß der DE 101 03 031 A1 können die zweipoligen Subsysteme 10 eines jeden Phasenmoduls 100 des Stromrichters nach Figur 1 in einen Schaltzustand I, II und III gesteuert werden. Im Schaltzustand I ist der abschaltbare Halbleiterschalter 1 eingeschaltet und der abschaltbare Halbleiterschalter 3 ausgeschaltet. Dadurch ist eine an den Anschlussklemmen X1 und X2 anstehende Klemmenspannung Uₓ₂₁ des zweipoligen Subsystems 10 gleich Null. Im Schaltzustand II sind der abschaltbare Halbleiterschalter 1 ausgeschaltet und der abschaltbare Halbleiterschalter 3 eingeschaltet. In diesem Schaltzustand II ist die anstehende Klemmenspannung U_{X21} gleich der am Speicherkondensator 9 anstehenden Kondensatorspannung U_{C}. Im Schaltzustand III sind beide abschaltbare Halbleiterschalter 1 und 3 ausgeschaltet und die am Speicherkondensator 9 anstehende Kondensatorspannung U_{C} ist konstant.

Damit dieser Stromrichter mit verteilten Energiespeichern 9 gemäß Figur 1 redundant arbeiten kann, muss sichergestellt werden, dass ein fehlerhaftes Subsystem 10 an seinen Klemmen X1 und X2 dauerhaft kurzgeschlossen ist. Das heißt, dass die Klemmenspannung U_{X21} des gestörten Subsystems 10 unabhängig von der Stromrichtung durch die Klemmen X1 und X2 Null ist.

Durch Ausfall eines der im Subsystem 10 vorhandenen abschaltbaren Halbleiterschalter 1 oder 3 oder einer zugehörigen Ansteuerschaltung ist dieses Subsystem 10 in seiner ordnungsgemäßen Funktion gestört. Weitere mögliche Ursachen für Funktionsstörungen sind unter anderem Fehler in der zugeordneten Ansteuerschaltung der Halbleiterschalter, deren Stromversorgung, Kommunikation und Messwerterfassung. Das heißt, das zweipolige Subsystem 10 kann nicht mehr wunschgemäß in einen der möglichen Schaltzustände I, II oder III gesteuert werden. Durch das Kurzschließen des Subsystems 10 an seinen Anschlüssen X1 und X2 wird diesem Subsystem keine Energie mehr zugeführt. Dadurch werden Folgeschäden wie Überhitzung und Brand beim weiteren Betrieb des Umrichters sicher ausgeschlossen.

Eine derartige kurzschlussartige leitende Verbindung zwischen den Anschlussklemmen X1 und X2 eines gestörten zweipoligen Subsystems 10 muss zumindest den Betriebsstrom eines Ventilzweigs T1, ..., T6 des Phasenmoduls 100, in dem das gestörte zweipolige Subsystem 10 verschaltet ist, sicher und ohne Überhitzung führen. In der DE 10 2005 040 543 A1 ist angegeben, wie ein gestörtes Subsystem 10 sicher kurzgeschlossen werden kann. Damit dieser bekannte Stromrichter mit verteilten Energiespeichern redundant weiter betrieben werden kann.

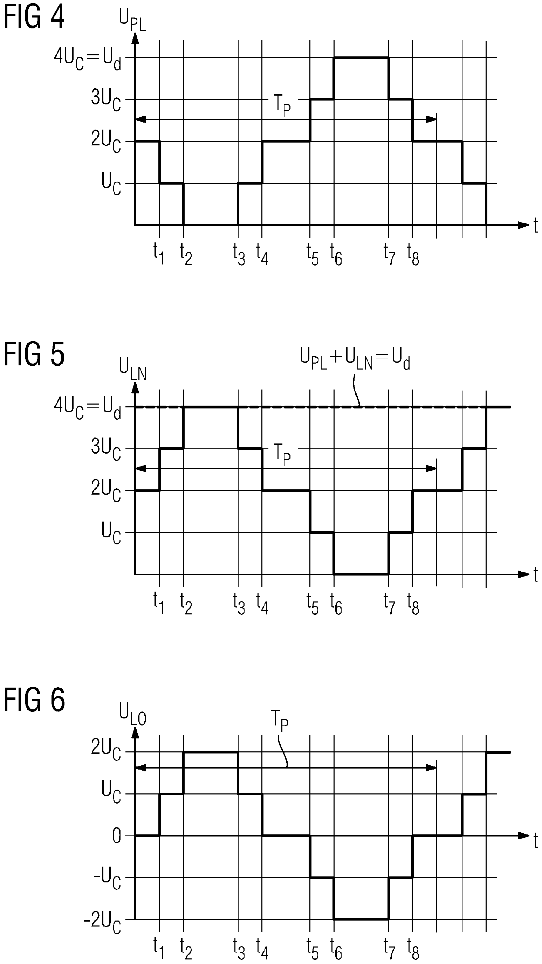

Für die folgende Erläuterung sei angenommen, dass die Speicherkondensatoren 9 aller zweipoligen Subsysteme 10 jeweils die gleiche Spannung U_{C} aufweisen. Verfahren zur anfänglichen Herstellung dieses Zustandes und dessen Beibehaltung im Betrieb sind ebenfalls aus der DE 101 03 031 A1 bekannt. In der Figur 4 ist in einem Diagramm über der Zeit t ein Verlauf der Potentialdifferenz U_{PL} der Klemme P eines Phasenmoduls 100 gegen einen Netzanschluss L dargestellt. In der Figur 5 ist in einem Diagramm über der Zeit t ein Verlauf der Potentialdifferenz U_{LN} der Klemme L gegen das Potential der Klemme N veranschaulicht. Gemäß diesen Potentialverläufen U_{PL} und U_{LN} werden zu den Zeitpunkten t1, t2, t3, t4, t5, t6, t7 bzw. t8 von den acht zweipoligen Subsystemen 10 der Ventilzweige T1 und T2 jeweils ein Subsystem zu- oder abgeschaltet. Ein Einschalten entspricht hierbei einem Übergang vom Schaltzustand I in den Schaltzustand II. Ein Abschalten entspricht einem Übergang vom Schaltzustand II in einen Schaltzustand I. In diesen beiden Diagrammen ist jeweils eine Periode T_{P} einer Grundschwingung des Potentialverlaufs u_{LO} (Fig. 6) des Lastanschlusses L gegenüber einem virtuellen Mittelpunkt O eines Phasenmoduls 100 des Stromrichters mit verteilten Energiespeichern 9 der Potentialverläufe U_{PL} und U_{LN} dargestellt.

In der Figur 6 ist ein Verlauf einer Differenz der Potentialverläufe U_{LN} und U_{PL} gemäß den Figuren 4 und 5 in einem Diagramm über der Zeit t dargestellt. Dieser sich ergebende Potentialverlauf U_{LO} liegt zwischen einem wechselspannungsseitigen Anschluss L1 bzw. L2 bzw. L3 eines Phasenmoduls 100 des Stromrichters mit verteilten Energiespeichern 9 nach Figur 1 und einem beliebig gewählten Potential eines virtuellen Mittelpunktes O eines Spannungszwischenkreises mit zwei Kondensatoren C1 und C2. Entsprechende Anteile von Oberschwingungen oder Gleichspannungskomponenten jeweils in den Ausgangsspannungen U_{LO} der Phasenmodule 100 des mehrphasigen Stromrichters mit verteilten Energiespeichern 9 nach Figur 1 lösen sich für den Fall eines symmetrischen Drehspannungssystems in den Differenzspannungen jeweils zweier phasenverschobener Ausgangsspannungen U_{L1O}, U_{L2O} oder U_{L3O} aus. Diesen beiden Potentialverläufe U_{PL} und U_{LN} ist ebenfalls zu entnehmen, dass die Summe der Potentiale zu jedem Zeitpunkt 4·U_{C} ist. Das heißt, der Wert der Gleichspannung U_{d} zwischen den Gleichspannungs-Sammelschienen P₀ und N₀ entspricht immer einer konstanten Anzahl von Subsystemen 10 im Schaltzustand II multipliziert mit dem Wert der am Kondensator 9 anstehenden Kondensatorspannung U_{C}. In dem beispielhaft dargestellten Fall entspricht diese Zahl der in den Ventilzweigen T1, ..., T6 vorhandenen Anzahl an zweipoligen Subsystemen 10 des Stromrichters nach Figur 1.

Aus der DE 10 2005 045 091 A1 ist ein Verfahren zur Steuerung eines Stromrichters mit verteilten Energiespeichern gemäß Figur 1 bekannt, mit dem bei einem Störungsfall wenigstens eines Subsystems eines Phasenmoduls dieses Stromrichters die Symmetriebedingungen eingehalten werden. Gemäß diesem bekannten Verfahren wird zunächst ein Ventilzweig eines der drei Phasen ermittelt, in dem ein oder mehrere zweipolige Subsysteme gestört sind. Jedes gestörte Subsystem wird derart angesteuert, dass die Amplitude der Klemmspannung jeweils Null ist. In einem weiteren Ventilzweig des gestörten Phasenmoduls wird entsprechend der Anzahl der ermittelten zweipoligen Subsysteme eine dementsprechende Anzahl von Subsystemen derart angesteuert, dass die Amplitude der Klemmspannung jeweils gleich einer Kondensatorspannung ist. Diese Steuerung von Subsystemen im gestörten Phasenmodul wird ebenfalls bei Subsystemen der Ventilzweige der ungestörten Phasenmodule ausgeführt.

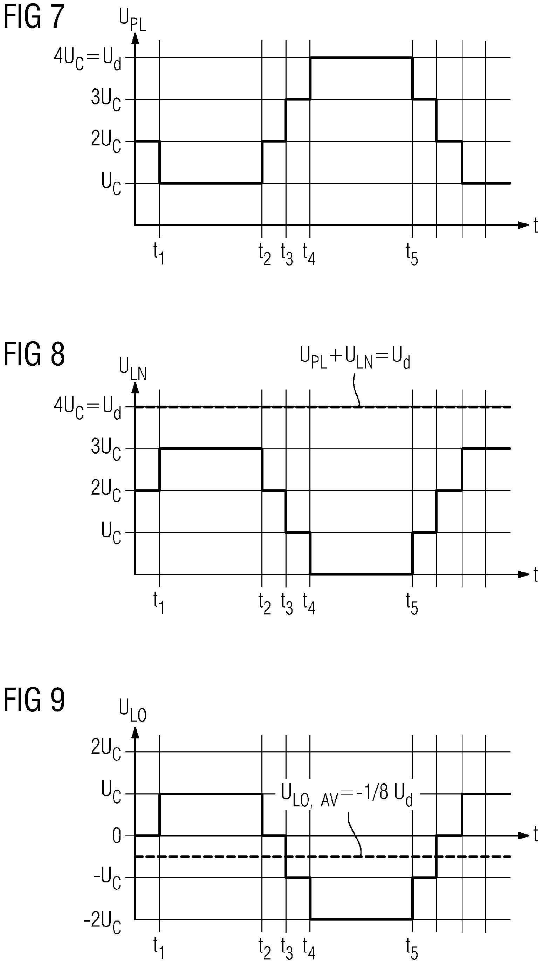

In der Figur 7 ist in einem Diagramm über der Zeit t ein Verlauf einer Potentialdifferenz U_{PL} der Klemme P eines Phasenmoduls 100 gegen einen Lastanschluss L eines Phasenmoduls 100 dargestellt, wobei im unteren Ventilzweig T2 bzw. T4 bzw. T6 eines Phasenmoduls 100 ein zweipoliges Subsystem 10 gestört ist. In der Figur 8 ist in einem Diagramm über der Zeit t ein Verlauf einer Potentialdifferenz U_{LN} der Klemme L gegen das Potential der Klemme N dargestellt. Dem Verlauf der Potentialdifferenz U_{PL} gemäß Figur 7 ist zu entnehmen, dass ein Subsystem 10 eines jeden oberen Ventilzweigs T1 bzw. T3 bzw. T5 eines jeden Phasenmoduls 100 derart angesteuert wird, dass deren Klemmenspannung U_{X21} immer gleich der am Speicherkondensator 9 anstehenden Kondensatorspannung U_{C} ist. Dadurch bleiben von den beispielhaft dargestellten vier Subsystemen 10 eines jeden oberen Ventilzweigs T1 bzw. T3 bzw. T5 nur drei Subsysteme 10 übrig, die zu- bzw. abgeschaltet werden. Dem zeitlichen Verlauf der Potentialdifferenz U_{LN} eines jeden unteren Ventilzweigs T2 bzw. T4 bzw. T6 eines jeden Phasenmoduls 100 ist zu entnehmen, dass jeweils eines von den beispielhaft dargestellten vier Subsystemen 10 derart angesteuert ist, dass deren Klemmenspannung U_{X21} immer gleich Null ist. Gemäß Figur 1 weist von diesen unteren Ventilzweigen T2, T4 und T6 der drei Phasenmodule 100 der Ventilzweig T2 ein gestörtes zweipoliges Subsystem 10, gekennzeichnet durch eine Schraffur, auf. Dadurch kann der Wert der Amplituden der Spannung U_{LN} eines jeden Ventilzweigs T2, T4 und T6 nur noch maximal 3·U_{C} sein. Durch dieses bekannte Verfahren ist die Anzahl der verwendeten Subsysteme 10 im gestörten Fall gleich der Anzahl der verwendeten Subsysteme 10 im ungestörten Fall. Der Verlauf der Amplitude der Summe der Potentialdifferenzen U_{PL} und U_{LN} ist in dem Diagramm der Figur 8 mittels einer unterbrochenen Linie veranschaulicht. Gegenüber einem ungestörten Fall weisen die Spannungen U_{L1O}, U_{L2O} und U_{L3O} im gestörten Fall jeweils eine geringere maximale Amplitude auf. Im dargestellten Beispiel weisen diese Spannungen U_{L1O}, U_{L2O} und U_{L3O} im ungestörten Fall eine maximale Spannamplitude von jeweils 1/2·U_{d} auf, wogegen im gestörten Fall eine maximale Amplitude nur noch 3/8·U_{d} ist. Das heißt, mittels dieses bekannten Verfahrens erhält man im gestörten Fall ein symmetrisches dreiphasiges Spannungssystem mit einer geringeren maximalen Amplitude.

In der Figur 9 ist über der Zeit t ein Verlauf der Differenz der Potentialdifferenzen U_{PL} und U_{LN} gemäß den Figuren 7 und 8 dargestellt. Diesen zeitlichen Verlauf des Potentials des Lastanschlusses L1 bzw. L2 bzw. L3 gegenüber einem virtuellen Mittelpunkt O ist zu entnehmen, dass dieser nicht mehr symmetrisch um eine Nulllage pendelt. Diese Nulllage ist um 1/8·U_{d} verschoben. Das heißt, dieser Potentialverlauf weist einen Gleichanteil auf.

Aus der Publikation "Neutral Shift" von Dan Eaton, John Rama und Pete Hammond in IEEE INDUSTRY APPLICATIONS MAGAZINE,Bd. 9, Nr. 6, vom 1. November 2003, Seiten 40-49, ist ein modularer Stromrichter bekannt, wobei im Störungsfall einzelne Subsysteme so ausgeschaltet werden, dass die Nulllage nicht verschoben wird. Der Aufbau des aus dieser Publikation bekannten Stromrichters unterscheidet sich jedoch wesentlich vom Aufbau des Stromrichters, der der vorliegenden Erfindung zugrunde liegt.

Der Erfindung liegt nun die Aufgabe zugrunde, das bekannte Steuerverfahren derart weiterzubilden, dass in den Ausgangsspannungen des Stromrichters mit verteilten Energiespeichern im Störungsfall keine Gleichspannungsanteile mehr auftreten.

Diese Aufgabe wird mit den kennzeichnenden Merkmalen in Verbindung mit den Merkmalen des Oberbegriffs des Anspruchs 1 erfindungsgemäß gelöst.

Dadurch, dass in einem zum gestörten Ventilzweig korrespondierenden Ventilzweig eines gestörten Phasenmoduls eine Anzahl von zweipoligen Subsystemen, wobei diese Anzahl der Anzahl der gestörten Subsysteme entspricht, derart angesteuert werden, dass die Amplituden deren Klemmenspannungen gleich Null sind, weist die Ausgangsspannung des gestörten Phasenmoduls keinen Gleichanteil mehr auf. Wegen der Symmetriebedingung werden entsprechende Subsysteme in den Ventilzweigen der ungestörten Phasenmodule entsprechend gesteuert. Somit erhält man ein gleichspannungsfreies dreiphasiges symmetrisches Spannungssystem.

Zur weiteren Erläuterung der Erfindung wird auf die Zeichnung Bezug genommen, in der eine Ausführungsform eines erfindungsgemäßen Verfahrens zur Steuerung eines mehrphasigen Stromrichters mit verteilten Energiespeichern schematisch veranschaulicht ist.
- FIG 1: zeigt ein Ersatzschaltbild eines bekannten Stromrichters mit verteilten Energiespeichern, in der
- FIG 2: ist ein Ersatzschaltbild einer ersten Ausführungsform eines bekannten zweipoligen Subsystems des Stromrichters nach FIG 1 dargestellt, die
- FIG 3: zeigt ein Ersatzschaltbild einer zweiten Ausführungsform eines bekannten zweipoligen Subsystems des Stromrichters nach FIG 1, in den
- FIG 4 - 6: sind Potentialverläufe eines Phasenmoduls eines Stromrichters nach FIG 1 im ungestörten Fall jeweils in einem Diagramm über der Zeit t dargestellt, in den
- FIG 7 - 9: sind Potentialverläufe eines Phasenmoduls eines Stromrichters nach FIG 1 im gestörten Fall jeweils in einem Diagramm über der Zeit t dargestellt, und in den
- FIG 10 - 12: sind Potentialverläufe eines Phasenmoduls eines Stromrichters nach FIG 1 im gestörten Fall jeweils in einem Diagramm über der Zeit t veranschaulicht, die mittels des erfindungsgemäßen Verfahrens generiert sind.

Es sei nun angenommen, dass ein zweipoliges Subsystem 10 des Ventilzweigs T2 des Phasenmoduls 100 des Stromrichters mit verteilten Energiespeichern 9 gemäß Figur 1 wegen irgendeiner Störung sicher kurzgeschlossen ist. Dieses gestörte zweipolige Subsystem 10 ist im Ersatzschaltbild gemäß Figur 1 mittels einer Schraffur kenntlich gemacht.

Gemäß dem erfindungsgemäßen Verfahren muss zunächst dieses gestörte zweipolige Subsystem 10 ermittelt werden. Nachdem dieses gestörte Subsystem 10 ermittelt worden ist, wird dieses Subsystem 10 derart angesteuert, dass die Amplitude der zugehörigen Klemmenspannung U_{X21} Null ist. Dieses Phasenmodul 100, in dem der Ventilzweig T2 ein gestörtes Subsystem 10 aufweist, wird im Folgenden als gestörtes Phasenmodul 100 bezeichnet. Dieses gestörte Phasenmodul 100 weist außerdem einen Ventilzweig T1 auf, bei dem kein Subsystem 10 gestört ist. Gemäß dem erfindungsgemäßen Verfahren wird entsprechend der Anzahl der gestörten Subsysteme 10 im gestörten Ventilzweig T2 eine entsprechende Anzahl von zweipoligen Subsystemen 10 des ungestörten Ventilzweigs T1 dieses gestörten Phasenmoduls 100 derart angesteuert, dass jeweils die Amplitude der Klemmspannung U_{X21} gleich Null ist. Da in diesem Beispiel nur ein zweipoliges Subsystem 10 des Ventilzweigs T2 gestört ist, wird im zugehörigen Ventilzweig T1 des gestörten Phasenmoduls 100 nur ein zweipoliges Subsystem 10 derart angesteuert, dass die Amplitude seiner Klemmenspannung U_{X21} gleich Null ist.

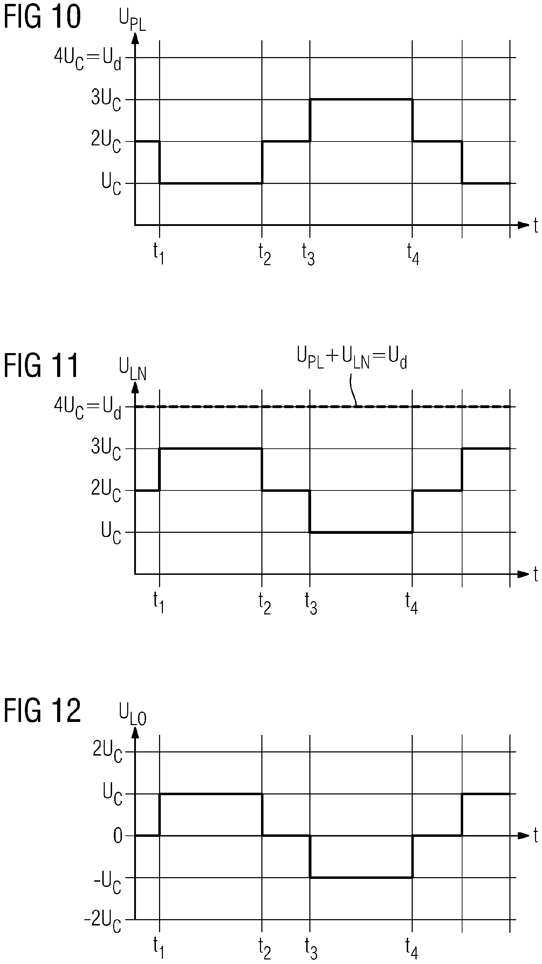

In der Figur 10 ist im Diagramm über der Zeit t der zeitliche Verlauf der Potentialdifferenz U_{PL} der Klemme P gegen einen Lastanschluss L1 dargestellt. In der Figur 11 ist in einem Diagramm über der Zeit t der zeitliche Verlauf der Potentialdifferenz U_{LN} der Klemme L gegen das Potential der Klemme N dargestellt. Beiden Potentialverläufen U_{PL} und U_{LN} ist zu entnehmen, dass von den vier zweipoligen Subsystemen 10 der Ventilzweige T1 und T2 nur drei Subsysteme 10 zur Steuerung zur Verfügung stehen. Die Summe dieser beiden Potentialverläufe U_{PL} und U_{LN} ergibt wieder eine Gleichspannung U_{d}, die zwischen den Gleichspannungs-Sammelschienen P₀ und N₀ dieses Stromrichters mit verteilten Energiespeichern 9 gemäß Figur 1 ansteht. Das heißt, die Gleichspannung U_{d} im ungestörten und gestörten Fall ist gleich. Aus Symmetriegründen werden die zweipoligen Subsysteme 10 der Ventilzweige T4, T3 und T6, T5 der beiden ungestörten Phasenmodule 100 des Stromrichters mit verteilten Energiespeichern 9 gemäß Figur 1 entsprechend gesteuert. Das heißt, dass in den zum gestörten Ventilzweig T2 des gestörten Phasenmoduls 100 korrespondierenden ungestörten Ventilzweigen T4 und T6 der ungestörten Phasenmodule 100 des Stromrichters nach Figur 1 eine zur Anzahl der gestörten Subsysteme 10 korrespondierende Anzahl von Subsystemen 10 derart gesteuert werden, dass die Amplituden deren Klemmenspannungen U_{X21} jeweils Null sind. Da im gestörten Ventilzweig T2 des gestörten Phasenmoduls 100 nur ein Subsystem 10 gestört ist, werden in zum Ventilzweig T2 korrespondierenden Ventilzweige T4 und T6 der ungestörten Phasenmodule 100 des Stromrichters mit verteilten Energiespeichern 9 nach Figur 1 jeweils nur ein zweipoliges Subsystem 10 derart angesteuert, dass die Amplituden der Klemmenspannungen U_{X21} jeweils Null sind. Im gestörten Phasenmodul 100 ist im ungestörten Ventilzweig T1 ebenfalls ein Subsystem 10 derart angesteuert, dass die Amplitude der zugehörigen Klemmenspannung U_{X21} Null ist. Das heißt, in den ungestörten Phasenmodulen 100 des Stromrichters mit verteilten Energiespeichern 9 nach Figur 1 werden in den zum ungestörten Ventilzweig T1 des gestörten Phasenmoduls 100 korrespondierenden Ventilzweigen T3 und T5 der ungestörten Phasenmodule 100 jeweils Subsysteme 10 der Anzahl der gestörten Subsysteme 10 des gestörten Ventilzweigs T2 derart angesteuert, dass die Amplituden deren Klemmenspannungen U_{X21} ebenfalls gleich Null sind.

Durch eine derartige Steuerung von zweipoligen Subsystemen 10 des Stromrichters mit verteilten Energiespeichern 9 erhält man Ausgangsspannungen U_{L1O}, U_{L2O} und U_{L3O}, die jeweils zwischen einem wechselspannungsseitigen Anschluss L1, L2 und L3 und einem virtuellen Mittelpunkt O anliegen. Diese Ausgangsspannungen U_{L1O}, U_{L2O} und U_{L3} weisen einen Potentialverlauf U_{LO} auf, der in einem Diagramm über der Zeit t in der Figur 12 dargestellt ist. Dieser Verlauf weist keinen Gleichanteil mehr auf. Die Amplituden dieser Ausgangsspannungen U_{L1O}, U_{L2O} und U_{L3O} sind jeweils den Amplituden der Ausgangsspannungen, die mittels des bekannten Steuerverfahrens generiert worden sind, kleiner. Gemäß dem Beispiel von vier Subsystemen 10 pro Ventilzweig T1, ..., T6 weisen die Ausgangsspannungen U_{L1O}, U_{L2O} jeweils eine Amplitude von 1/4·U_{d} gegenüber einer Amplitude von 3/8·U_{d} (bekanntes Steuerverfahren). Dieses symmetrische dreiphasige Spannungssystem mit einer kleineren Amplitude ist dafür aber gleichspannungsfrei.

Der Gleichanteil, der beim bekannten Verfahren in den Ausgangsspannungen U_{L1O}, U_{L2O} und U_{L3O} des Stromrichters mit verteilten Energiespeichern 9 nach Figur 1 auftritt, verursacht in einer angeschlossenen Drehfeldmaschine eine Sternpunktverschiebung, die zu Lagerströmen führen kann. Des Weiteren verursacht der genannte Gleichanteil bei Verwendung des Umrichters als aktive, direkte Netzeinspeisung eine Verschiebung des Potentials des Umrichters gegenüber dem Erdpotential, wenn der netzseitige Sternpunkt geerdet ist. Dies erfordert unter Umständen einen Mehraufwand bezüglich der Isolation des Umrichters. Mit dem Verfahren nach der Erfindung wird dieser Nachteil beseitigt, wobei aber eine kleinere Amplitude der Ausgangsspannungen U_{L1O}, U_{L2O} und U_{L3O} des Stromrichters nach Figur 1 in Kauf genommen werden muss. Je mehr zweipolige Subsysteme 10 in den Ventilzweigen T1, ..., T6 verwendet werden, umso feinstufiger sind die Ausgangsspannungen U_{L1O}, U_{L2O}, und U_{L3O} des Stromrichters mit verteilten Energiespeichern 9 nach Figur 1. Dadurch kann ein sinusförmiger Verlauf selbst bei gestörten zweipoligen Subsystemen 10 approximiert werden.

## Patentansprüche

1. Verfahren zur Steuerung eines Stromrichters mit wenigstens zwei einen ersten und einen zweiten jeweils wenigstens drei in Reihe geschaltete zweipolige Subsysteme (10) aufweisenden Ventilzweig (T1, ..., T6) aufweisenden Phasenmodulen (100) bei Ausfall wenigstens eines Subsystems (10) eines Ventilzweigs (T1, ..., T6), wobei die Phasenmodule (100) jeweils einen Brückenzweig des Stromrichters bilden, wobei der erste Ventilzweig (t1,T3,T5) und der zweite Ventilzweig (T2,T4,T6) jeweils in einer Reihenschaltung angeordnet sind, wobei die Phasenmodule (100) gleichspannungsseitig mit einer positiven und einer negativen Gleichspannungssammelschiene elektrisch leitend verbunden sind, wobei die zweipoligen Subsysteme einen Speicherkondensator (9) und genau zwei abschaltbare Halbleiterschalter (1,3) aufweisen, wobei ein Verknüpfungspunkt des ersten und zweiten Ventilzweiges (T1, T3, T5; T2, T4, T6) des jeweiligen Phasenmoduls (100) einen wechselspannungsseitigen Anschluss (L1,L2,L3) des Phasenmoduls 100 bildet, wobei der Ventilzweig (T1, ..., T6) mit dem gestörten Subsystem (10) ermittelt wird, und wobei jeweils ein Subsystem (10) eines zum gestörten Ventilzweig (T1, ..., T6) korrespondierenden Ventilzweigs (T1, ..., T6) eines jeden ungestörten Phasenmoduls (100) derart angesteuert werden, dass deren Klemmenspannungen (Uₓ₂₁) jeweils Null sind,
**dadurch gekennzeichnet, dass** ein Subsystem (10) eines zum gestörten Ventilzweig (T1, ..., T6) korrespondierenden Ventilzweigs (T1, ..., T6) des gestörten Phasenmoduls (100) derart angesteuert wird, dass dessen Klemmenspannung (Uₓ₂₁) gleich Null ist, und dass jeweils ein Subsystem (10) eines zu diesem Ventilzweig (T1, ..., T6) korrespondierenden Ventilzweigs (T1, ..., T6) eines jeden ungestörten Phasenmoduls (100) derart angesteuert werden, dass deren Klemmenspannungen (Uₓ₂₁) gleich Null sind.

## Claims

1. Method for controlling a converter having at least two phase modules (100) which have a first and a second valve arm (T1, ..., T6), which each have at least three two-pole subsystems (10), which are connected in series, in the event of failure of at least one subsystem (10) of a valve arm (T1, ..., T6), wherein the phase modules (100) each form a bridge arm of the converter, wherein the first valve arm (T1, T3, T5) and the second valve arm (T2, T4, T6) are in each case arranged in a series circuit, wherein, on the DC voltage side, the phase modules (100) are electrically conductively connected to a positive and a negative DC voltage busbar, wherein the two-pole subsystems have a storage capacitor (9) and exactly two semiconductor switches (1, 3) which can be turned off, wherein a junction point between the first and second valve arms (T1, T3, T5,; T2, T4, T6) of the respective phase module (100) forms a connection (L1, L2, L3) on the AC voltage side of the phase module 100, wherein the valve arm (T1, ..., T6) with the faulty subsystem (10) is determined, and wherein one subsystem (10) of a valve arm (T1, ..., T6) which corresponds to the faulty valve arm (T1, ..., T6) in each sound phase module (100) is in each case controlled such that its terminal voltages (U_{X21}) are in each case zero,
**characterized in that** one subsystem (10) of a valve arm (T1, ..., T6) which corresponds to the faulty valve arm (T1, ..., T6) in the faulty phase module (100) is controlled such that its output voltage (U_{X21}) is equal to zero, and such that one subsystem (10) of a valve arm (T1, ..., T6) which corresponds to this valve arm (T1, ..., T6) in each sound phase module (100) is in each case controlled such that its terminal voltages (U_{X21}) are equal to zero.

## Revendications

1. Procédé de commande d'un convertisseur ayant au moins deux modules (100) de phase, comportant une première et une deuxième branches (T1, ..., T6) de soupape, ayant chacune au moins trois sous-systèmes (10) bipolaires montés en série, lors de la défaillance d'au moins un sous-système (10) d'une branche (T1, ..., T6) de soupape, les modules (100) de phase formant chacun une branche en pont du convertisseur, la première branche (T1, T3, T5) de soupape et la deuxième branche (T2, T4, T6) de soupape étant montées chacune suivant un circuit en série, les modules (100) de phase étant connectés d'une manière conductrice de l'électricité du côté de la tension continue à une barre collectrice de tension continue positive et à une barre collectrice de tension continue négative, les sous-systèmes bipolaires ayant un condensateur (9) d'accumulation et exactement deux interrupteurs (1, 3) à semi-conducteur pouvant être bloqués, dans lequel un point de liaison de la première et de la deuxième branche (T1, T3, T5 ; T2, T4, T6) de soupape du module (100) de phase respectif forme une borne (L1, L2, L3) du côté de la tension alternative du module (100) de phase, dans lequel on détermine la branche (T1, ..., T6) de soupape ayant le sous-système (10) perturbé et dans lequel on commande, respectivement, un sous-système (10) d'une branche (T1, ..., T6) de soupape, correspondant à la branche (T1, ..., T6) de soupape perturbée, d'un module (100) de phase non perturbé, de manière à ce que ses tensions (U_{X21}) aux bornes soient, respectivement, égales à zéro,
**caractérisé en ce que** l'on commande un sous-système (10) d'une branche (T1, ..., T6) de soupape, correspondant à la branche (T1, ..., T6) de soupape perturbée, du module (100) de phase perturbé, de manière à ce que sa tension (U_{X21}) aux bornes soit égale à zéro, et **en ce que** l'on commande, respectivement, un sous-système (10) d'une branche (T1, ..., T6), correspondant à cette branche (T1, ..., T6) de soupape, d'un module (100) de phase non perturbé, de manière à ce que ses tensions (U_{X21} ) aux bornes soient égales à zéro.
